# EUROPEAN PATENT SPECIFICATION

(11) **EP 4 130 172 B1**
(45) Date of publication and mention of the grant of the patent: **16.10.2024**
(21) Application number: 21780907.8
(22) Date of filing: 05.03.2021
(51) Int. Cl.: C09D 11/101, C09D 11/106

(54) **ACTIVE ENERGY RAY-CURABLE INK COMPOSITION**
DURCH AKTIVE ENERGIESTRAHLEN HÄRTBARE DRUCKFARBENZUSAMMENSETZUNG
COMPOSITION D'ENCRE DURCISSABLE PAR RAYONNEMENT À ÉNERGIE ACTIVE

(30) Priority: 30.03.2020 JP 2020060198
(43) Date of publication of application: 08.02.2023
(73) Proprietor: Osaka Soda Co., Ltd., Osaka-shi Osaka 550-0011 (JP)
(72) Inventor: FUJIYAMA, Takuya, Osaka-shi, Osaka 550-0011 (JP); OHASHI, Shinichiro, Osaka-shi, Osaka 550-0011 (JP); INOUE, Satoshi, Osaka-shi, Osaka 550-0011 (JP)
(74) Representative: Vossius & Partner Patentanwälte Rechtsanwälte mbB
(86) International application number: PCT/JP2021/008645
(87) International publication number: WO 2021/199904

(56) References cited:
- EP-A1- 3 438 190
- WO-A1-2016/125661
- JP-A- 2008 280 460
- JP-A- 2012 001 587
- JP-A- 2019 026 675

## Description

### TECHNICAL FIELD

The present invention relates to an active energy ray-curable ink composition containing an allylic polymer, a dispersant, and a pigment, more specifically a photocurable ink composition having excellent printability (flowability).

### BACKGROUND ART

Various ink compositions to be cured with light (for example, ultraviolet rays) are highly evaluated for their features such as fast curing rate and short curing time, environmental friendliness due to no use of solvents, and resource and energy saving features. Therefore, they are becoming more and more widely used in practice.

Among such ink compositions, those containing diallyl phthalate resins derived from diallyl phthalates (diallyl orthophthalate, diallyl isophthalate, diallyl terephthalate) are used as UV offset inks for paper.

However, in offset ink applications, the incorporation of diallyl phthalate resins is known to lead to insufficient adhesion to plastic substrates (for example, Patent Literature 1). As various types of plastic products, including polyethylene terephthalate (PET) and polypropylene (PP), have been marketed in recent years, there is a need to improve adhesion to plastic substrates with which diallyl phthalate resins have problems.

Under the above circumstances, the present applicant has developed a photocurable ink composition having excellent adhesion to plastic substrates (Patent Literature 2) .

### CITATION LIST

### PATENT LITERATURE

Patent Literature 1: JP S52-4310 A
Patent Literature 2: WO 2016/125661 A1

### SUMMARY OF INVENTION

### TECHNICAL PROBLEM

The present inventors conducted various studies on the invention disclosed in Patent Literature 2 and discovered the following new problem: a composition containing an allylic polymer produced by polymerizing an allylic compound having a specific structure may have insufficient printability (flowability) during printing, depending on the combination of the ink component and pigment used.

The present invention aims to solve the new problem discovered by the present inventors which is inherent in the use of an allylic polymer produced by polymerizing an allylic compound having a specific structure, and provide an active energy ray-curable ink composition which can constitute a composition having good printability (flowability) during printing, even though it contains an allylic polymer produced by polymerizing an allylic compound having a specific structure.

### SOLUTION TO PROBLEM

As a result of extensive studies, the present inventors found that an active energy ray-curable ink composition containing an allylic polymer produced by polymerizing an allylic compound having a specific structure, a dispersant, and a pigment has excellent adhesion to plastic substrates and can constitute a composition having good flowability during printing. The present inventors thus arrived at the present invention.

Specifically, the active energy ray-curable ink composition of the present invention contains: an allylic polymer; a dispersant; and a pigment, the allylic polymer being produced by polymerizing an allylic compound represented by the following formula (I): 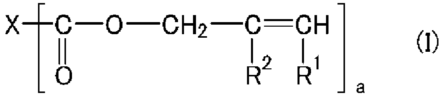 wherein R¹ and R² each represent H or CH₃;
X represents an a-valent group having an unsubstituted saturated or partially unsaturated four- to eight-membered cyclic backbone; and a represents 2 or 3.

By including an allylic polymer produced by polymerizing an allylic compound of formula (I), a dispersant, and a pigment, an active energy ray-curable ink composition is obtained which has excellent adhesion to plastic substrates and excellent flowability during printing.

Moreover, the composition containing the allylic polymer, dispersant, and pigment can constitute a composition which is highly compatible with other ink components, if combined.

The dispersant preferably has at least one of a basic polar functional group or an acidic polar functional group, and more preferably has at least one of an amine value of 3 mg KOH/g or higher or an acid value of 3 mg KOH/g or higher.

In the active energy ray-curable ink composition of the present invention, X in formula (I) preferably has any of the following cyclic backbones:

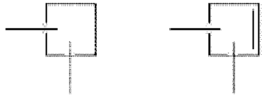

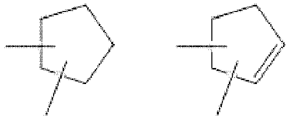

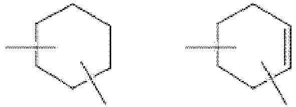

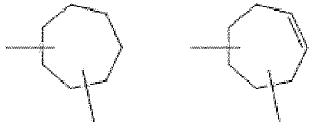

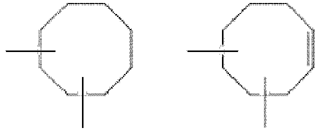

The active energy ray-curable ink composition of the present invention preferably further contains an ethylenically unsaturated compound.

Such an ethylenically unsaturated compound is highly compatible with the allylic polymer and dispersant and thus suitable to form a composition having good compatibility.

The active energy ray-curable ink composition of the present invention preferably further contains a photopolymerization initiator.

The presence of such a photopolymerization initiator allows polymerization by exposure to light to smoothly proceed so that a polymer having a higher molecular weight can be produced in a short time.

### ADVANTAGEOUS EFFECTS OF INVENTION

The present invention provides an active energy ray-curable ink composition that has excellent flowability during printing when it is used as an ink component. The present invention also provides an active energy ray-curable ink composition that has good adhesion to synthetic polymer substrates, particularly plastic substrates. Furthermore, the present invention provides an active energy ray-curable ink composition that has excellent compatibility with ethylenically unsaturated compounds.

### DESCRIPTION OF EMBODIMENTS

The present invention is described in detail below.

The active energy ray-curable ink composition of the present invention contains an allylic polymer produced by polymerizing an allylic compound of formula (I) (herein, also referred to as allylic polymer produced by polymerizing an allylic compound having a specific structure), a dispersant, and a pigment. Thus, an active energy ray-curable ink composition having excellent flowability during printing is obtained.

The reason why the composition provides this advantageous effect is believed to be as follows.

Studies of the present inventors revealed that, when a pigment is incorporated into a composition containing an allylic polymer produced by polymerizing an allylic compound having a specific structure, the pigment may aggregate due to the low affinity for the polymer, thereby reducing flowability during printing. The studies of the present inventors revealed that among various other flowability attributes during printing, flowability in the ink fountain, which is generally provided with a slope of 40 to 60 degrees, is reduced. In contrast, according to the present invention, by incorporating a dispersant in addition to a pigment, the dispersant can enter around the pigment particles to prevent aggregation of the pigment, so that an active energy ray-curable ink composition is obtained which is excellent in flowability during printing, particularly flowability in the ink fountain, even though it contains an allylic polymer produced by polymerizing an allylic compound having a specific structure.

This advantageous effect is significant when the dispersant has a basic polar functional group and/or an acidic polar functional group. This is because, in general, a basic polar functional group and/or an acidic polar functional group are present in a pigment, and thus the use of a combination of a dispersant having a basic polar functional group and/or an acidic polar functional group with a pigment having a basic polar functional group and/or an acidic polar functional group allows the advantageous effect to be more significantly achieved.

More specifically, to obtain a better acid-base interaction, it is preferred to use a dispersant having an acidic polar functional group with a pigment having a basic polar functional group, or to use a dispersant having a basic polar functional group with a pigment having an acidic polar functional group. This allows the advantageous effect to be further significantly achieved.

Moreover, the allylic polymer includes an unsubstituted saturated or partially unsaturated four- to eight-membered cyclic backbone in X in formula (I), and thus the advantageous effect can be more suitably achieved.

Furthermore, by the use of an allylic polymer produced by polymerizing an allylic compound having a specific structure, an active energy ray-curable ink composition is obtained which has good adhesion to synthetic polymer substrates, particularly plastic substrates.

### Allylic polymer

The active energy ray-curable ink composition of the present invention contains an allylic polymer produced by polymerizing an allylic compound represented by the following formula (I): 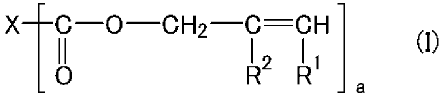 wherein R¹ and R² each represent H or CH₃; X represents an a-valent group having an unsubstituted saturated or partially unsaturated four- to eight-membered cyclic backbone; and a represents 2 or 3.

Preferred examples of X in formula (I) include those having the following cyclic backbones:

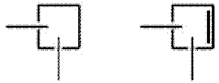

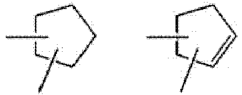

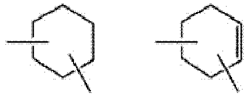

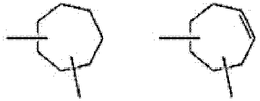

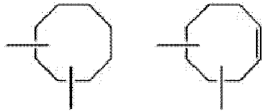

More preferred examples of X in formula (I) include those having the following cyclic backbones:

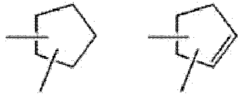

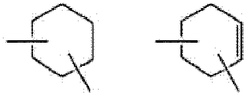

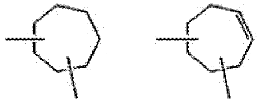

Even more preferred examples of X in formula (I) include those having the following cyclic backbones:

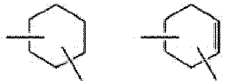

X may be of various types and may have a cyclic backbone other than those mentioned above. When X has a partially unsaturated cyclic backbone, the number of double bonds in the cyclic backbone is not limited to one and may be two or more. However, X does not have an aromatic six-membered cyclic backbone.

X may be intramolecularly crosslinked. Examples of the intramolecularly crosslinked X include adamantane, norbornene, and norbornane.

X is an a-valent group where a is 2 or 3 and is therefore a bivalent or trivalent group. A number a (2 or 3) of allyl ester groups [-CO-O-CH₂-CR²=CHR¹] shown in formula (I) are bound to the cyclic backbone of X.

Any combination of positions on the ring of X substituted by allyl ester groups [-CO-O-CH₂-CR²=CHR¹] may be used. The allylic compound may be a mixture of materials that differ in the combination of substitution positions. Particularly when two allyl ester groups are bound to a six-membered ring X, the two allyl ester groups may be in the ortho, meta, or para orientation, preferably in the ortho or para orientation.

Specific examples of the allylic compound of formula (I) include diallyl 1,2-cyclohexanedicarboxylate, diallyl 1,3-cyclohexanedicarboxylate, diallyl 1,4-cyclohexanedicarboxylate, diallyl 4-cyclohexene-1,2-dicarboxylate, and diallyl 2-cyclohexene-1,2-dicarboxylate. Preferred among these are diallyl 1,2-cyclohexanedicarboxylate, diallyl 4-cyclohexene-1,2-dicarboxylate, and diallyl 1,4-cyclohexanedicarboxylate, with diallyl 1,2-cyclohexanedicarboxylate being more preferred.

At least one allylic polymer produced by polymerizing at least one selected from the group consisting of the above-mentioned allylic compounds may be used in the active energy ray-curable ink composition. Moreover, those produced by copolymerizing the allylic compound of formula (I) with other polymerizable compounds may be used in the active energy ray-curable ink composition. Examples of such copolymerizable compounds include 3-methyl-hexahydro-1,2-diallyl phthalate, 4-methyl-hexahydro-1,2-diallyl phthalate, 3-methyl-1,2,3,6-tetrahydro-1,2-diallyl phthalate, and 4-methyl-1,2,3,6-tetrahydro-1,2-diallyl phthalate.

The specific exemplary allylic compounds of formula (I) may be produced, for example, by an esterification reaction between cyclohexanedicarboxylic acid or cyclohexanedicarboxylic anhydride and allyl alcohol or allyl chloride, or an esterification reaction between cyclohexenedicarboxylic acid or cyclohexenedicarboxylic anhydride and allyl alcohol or allyl chloride.

Commercial products of the specific exemplary allylic compounds of formula (I) may also be used.

The allylic compound of formula (I) may be polymerized by any method, including usual polymerization reactions. An appropriate polymerization initiator, if needed, may be added in such a polymerization reaction. The use of the polymerization initiator allows production of a higher molecular weight polymer in a short time.

Examples of polymerization initiators that may be used in the polymerization reaction of the allylic compound include azo initiators such as azobisisobutyronitrile and dimethyl 2,2'-azobisisobutyrate; peroxide initiators such as ketone peroxides, peroxy ketals, hydroperoxides, dialkyl peroxides, diacyl peroxides, peroxy dicarbonates, peroxy esters, and benzoyl peroxide; and photopolymerization initiators, including: alkylphenone initiators such as 2-methyl-1-[4-(methylthio)phenyl]-2-morpholinopropan-1-one, 1-hydroxycyclohexyl phenyl ketone, and 2-dimethylamino-2-(4-methylbenzyl)-1-(4-morpholin-4-yl-phenyl)-butan-1-one; benzoin initiators such as benzoin ethyl ether; benzophenone initiators such as 4,4'-bis-(diethylamino)benzophenone; acylphosphine oxide initiators such as 2,4,6-trimethylbenzoyldiphenylphosphine oxide; thioxanthone initiators such as 2,4-diethylthioxanthone; benzil initiators such as benzil (dibenzoyl); and quinone initiators such as 9,10-phenanthrenequinone.

The amount of polymerization initiators per 100 parts by mass of the allylic compound of formula (I) as monomer is preferably 5.0 parts by mass or less, more preferably 3.0 parts by mass or less. Moreover, the amount is particularly preferably 0.001 to 3.0 parts by mass.

The reaction temperature during the polymerization is preferably 60 to 240°C, for example, 80 to 220°C. The reaction time is preferably 0.1 to 100 hours, for example, 1 to 30 hours.

An allylic polymer having monomer units based on the allylic compound of formula (I) may be prepared by polymerizing the allylic compound of formula (I) as described above or by other methods.

The amount of monomer units based on the allylic compound of formula (I), based on 100% by mass of the allylic polymer, is preferably 20% by mass or more, more preferably 50% by mass or more, still more preferably 80% by mass or more, particularly preferably 98% by mass or more, and may be 100% by mass.

The allylic polymer preferably has a weight average molecular weight of 300,000 or less, more preferably 200,000 or less. Moreover, the weight average molecular weight is still more preferably 2,000 to 150,000, particularly preferably 5,000 to 140,000.

The weight average molecular weight of the allylic polymer can be determined at 40°C by gel permeation chromatography (GPC system available from Shimadzu Corporation) relative to polystyrene standards.

The amount of the allylic polymer(s) in the active energy ray-curable ink composition of the present invention is preferably 0.1 to 45% by mass, more preferably 0.1 to 40% by mass, still more preferably 0.5 to 35% by mass of the total amount of the active energy ray-curable ink composition. The lower limit is particularly preferably 1% by mass or more, most preferably 3% by mass or more, further most preferably 5% by mass or more, still further most preferably 7% by mass or more, particularly most preferably 10% by mass or more. The upper limit is particularly preferably 30% by mass or less, most preferably 25% by mass or less, further most preferably 20% by mass or less. When the amount is in the range indicated above, the allylic polymer can be maintained sufficiently soluble even with a dispersant, a pigment, and an ethylenically unsaturated compound, which will be described later, to provide a composition having excellent compatibility.

### Dispersant

Any dispersant may be used in the active energy ray-curable ink composition of the present invention. Examples include hydroxy group-containing carboxylic acid esters, salts of long-chain polyaminoamides and high molecular weight acid esters, salts of high molecular weight polycarboxylic acids, salts of long-chain polyaminoamides and polar acid esters, high molecular weight unsaturated acid esters, high molecular weight copolymers, modified polyurethanes, modified polyacrylates, polyether ester type anionic activators, salts of naphthalene sulfonic acid formalin condensates, polyoxyethylene alkyl phosphates, polyoxyethylene nonylphenyl ether, polyester polyamines, and stearylamine acetate.

The dispersant used is preferably a dispersant having a basic polar functional group and/or an acidic polar functional group, more preferably a dispersant having an amine value of 3 mg KOH/g or higher and/or an acid value of 3 mg KOH/g or higher. Such a dispersant may be used with a pigment, preferably a pigment having a basic polar functional group and/or an acidic polar functional group, to provide an active energy ray-curable ink composition which is excellent in flowability during printing, particularly flowability in the ink fountain.

Examples of the above dispersants include dispersants having a basic polar functional group and dispersants having an acidic polar functional group. The dispersants may have both a basic polar functional group and an acidic polar functional group.

The basic polar functional group in the dispersants having a basic polar functional group includes, for example, at least one group selected from the group consisting of amino, imino, amide, imido, and nitrogen-containing heterocyclic groups. When the dispersant used has a basic polar functional group, it is excellent in acid-base interaction with the pigment and can improve the dispersibility of the active energy ray-curable ink composition. The basic polar functional group preferably includes an amino group.

Examples of the dispersants having a basic polar functional group include SOLSPERSE series available from The Lubrizol Corporation, such as the trade names SOLSPERSE 24000 (amine value: 41.6 mg KOH/g), SOLSPERSE 32000 (amine value: 31.2 mg KOH/g), SOLSPERSE 39000 (amine value: 25.7 mg KOH/g), SOLSPERSE J100, and SOLSPERSE J200; DisperBYK series available from BYK Japan KK, such as the trade names DisperBYK-108, DisperBYK-2013, DisperBYK-180, DisperBYK-106, DisperBYK-162 (amine value: 13 mg KOH/g), DisperBYK-163 (amine value: 10 mg KOH/g), DisperBYK-168 (amine value: 11 mg KOH/g), DisperBYK-2050 (amine value: 30.7 mg KOH/g), and DisperBYK-2150 (amine value: 56.7 mg KOH/g); BYKJET series available from BYK Japan KK, such as the trade names BYKJET-9151 (amine value: 17.2 mg KOH/g) and BYKJET-9152 (amine value: 27.3 mg KOH/g); and AJISPER series available from Ajinomoto Fine-Techno Co., Inc., such as the trade names AJISPER PB821 (amine value: 11.2 mg KOH/g), AJISPER PB822 (amine value: 18.2 mg KOH/g), and AJISPER PB881 (amine value: 17.4 mg KOH/g).

The amine value of the dispersants having a basic polar functional group is preferably 3 mg KOH/g or higher, and more preferably 3 mg KOH/g to 70 mg KOH/g. The lower limit is still more preferably 5 mg KOH/g or higher, particularly preferably 7 mg KOH/g or higher, most preferably 9 mg KOH/g or higher. The upper limit is still more preferably 60 mg KOH/g or lower, particularly preferably 50 mg KOH/g or lower, most preferably 40 mg KOH/g or lower, further most preferably 35 mg KOH/g or lower. When the amine value is within the range indicated above, the advantageous effect tends to be more suitably achieved.

Preferred among the dispersants having a basic polar functional group are those having an amine value of 5 to 60 mg KOH/g. Examples include AJISPER PB821 (amine value: 11.2 mg KOH/g), AJISPER PB881 (amine value: 17.4 mg KOH/g), and SOLSPERSE 32000 (amine value: 31.2 mg KOH/g).

Examples of the acidic polar functional group in the dispersants having an acidic polar functional group include carboxyl, sulfo, and phosphoric acid groups. When the dispersant used has an acidic polar functional group, it is excellent in acid-base interaction with the pigment and can improve the dispersibility of the active energy ray-curable ink composition. The acidic polar functional group preferably includes a carboxyl group.

Examples of the dispersants having an acidic polar functional group include DisperBYK-101 (acid value: 30 mg KOH/g), DisperBYK-102 (acid value: 101 mg KOH/g), DisperBYK-103 (acid value: 101 mg KOH/g), DisperBYK-106 (acid value: 132 mg KOH/g), and DisperBYK-111 (acid value: 129 mg KOH/g) all available from BYK Japan KK; EFKA4010 (acid value: 10 to 15 mg KOH/g) available from EFKA Additives; SOLSPERSE 36000 (acid value: 45 mg KOH/g), SOLSPERSE 41000 (acid value: 50 mg KOH/g), SOLSPERSE 3000 (acid value: 3,000 mg KOH/g), SOLSPERSE 21000 (acid value: 72 mg KOH/g), SOLSPERSE 26000 (acid value: 50 mg KOH/g), SOLSPERSE 36600 (acid value: 23 mg KOH/g), SOLSPERSE 39000 (acid value: 33 mg KOH/g), SOLSPERSE 41090 (acid value: 23 mg KOH/g), SOLSPERSE 43000 (acid value: 8 mg KOH/g), SOLSPERSE 44000 (acid value: 12 mg KOH/g), SOLSPERSE 53095 (acid value: 47 mg KOH/g), and SOLSPERSE 54000 (acid value: 47 mg KOH/g) all available from The Lubrizol Corporation; and AJISPER series available from Ajinomoto Fine-Techno Co., Inc., such as AJISPER PB821 (acid value: 17 mg KOH/g) and AJISPER PB881 (acid value: 16 mg KOH/g).

The acid value of the dispersants having an acidic polar functional group is preferably 3 mg KOH/g or higher, and more preferably 3 mg KOH/g to 180 mg KOH/g. The lower limit is still more preferably 5 mg KOH/g or higher, particularly preferably 7 mg KOH/g or higher, most preferably 10 mg KOH/g or higher, further most preferably 12 mg KOH/g or higher, still further most preferably 14 mg KOH/g or higher. The upper limit is still more preferably 150 mg KOH/g or lower, particularly preferably 120 mg KOH/g or lower, most preferably 80 mg KOH/g or lower, further most preferably 60 mg KOH/g or lower, still further most preferably 55 mg KOH/g or lower. When the acid value is within the range indicated above, the advantageous effect tends to be more suitably achieved.

Preferred among the dispersants having an acidic polar functional group are those having an acid value of 10 to 150 mg KOH/g. Examples include SOLSPERSE 36000 (acid value: 45 mg KOH/g), AJISPER PB821 (acid value: 17 mg KOH/g), and AJISPER PB881 (acid value: 16 mg KOH/g).

The term "amine value" refers to the amine value of one gram of the dispersant solids and is determined by potentiometric titration with a 0.1N hydrochloric acid aqueous solution and converted to an equivalent amount of potassium hydroxide.

The term "acid value" refers to the acid value of one gram of the dispersant solids and can be determined by potentiometric titration in accordance with JIS K0070.

Although the weight average molecular weight (Mw) of the dispersant is not limited, it is preferably 500 or more, more preferably 1,000 or more, still more preferably 2,000 or more, particularly preferably 3,000 or more, most preferably 3,500 or more, but is preferably 15,000 or less, more preferably 10,000 or less, still more preferably 8,000 or less, particularly preferably 7,000 or less, most preferably 6,500 or less. When the weight average molecular weight is within the range indicated above, the advantageous effect tends to be more suitably achieved.

The weight average molecular weight of the dispersant can be determined at 40°C by, for example, gel permeation chromatography (Prominence-i, LC-2030 available from Shimadzu Corporation) relative to polystyrene standards.

The amount of the dispersant contained in the active energy ray-curable ink composition may be in the range of 0.01% by mass to 20% by mass, preferably in the range of 0.01% by mass to 15% by mass, more preferably in the range of 0.05% by mass to 15% by mass, still more preferably in the range of 0.05% by mass to 12% by mass, particularly preferably in the range of 0.05% by mass to 10% by mass of the total amount of the active energy ray-curable ink composition. The lower limit is most preferably 0.1% by mass or more, further most preferably 1% by mass or more, still further most preferably 3% by mass or more, particularly most preferably 5% by mass or more. When the amount is within the range indicated above, sufficient adhesion to plastic substrates can be obtained, and the allylic polymer, dispersant, and pigment can be maintained sufficiently soluble to provide a composition having excellent compatibility. Further, they can be maintained sufficiently soluble even with an ethylenically unsaturated compound.

### Pigment

Although the pigment is not limited, organic or inorganic pigments may be used alone or in admixture of two or more. Preferred among the pigments are pigments having high color developing properties and high heat resistance, typical examples of which include, but are not limited to, organic pigments. In particular, the pigment is preferably a pigment having a basic polar functional group and/or an acidic polar functional group as, in general, a basic polar functional group and/or an acidic polar functional group are present in a pigment, as described earlier.

Non-limiting examples of pigments that may be used in the present invention include soluble azo pigments, insoluble azo pigments, phthalocyanine pigments, halogenated phthalocyanine pigments, quinacridone pigments, isoindolinone pigments, isoindoline pigments, perylene pigments, perinone pigments, dioxazine pigments, anthraquinone pigments, dianthraquinonyl pigments, anthrapyrimidine pigments, anthanthrone pigments, indanthrone pigments, flavanthrone pigments, pyranthrone pigments, and diketopyrrolopyrrole pigments.

Further, specific examples of those indicated by the color index generic name include
Pigment Black 7; blue pigments such as Pigment Blue 15, Pigment Blue 15:1, Pigment Blue 15:3, Pigment Blue 15:4, Pigment Blue 15:6, Pigment Blue 22, Pigment Blue 60, and Pigment Blue 64;
green pigments such as Pigment Green 7, Pigment Green 36, and Pigment Green 58;
red pigments such as Pigment Red 9, Pigment Red 48, Pigment Red 49, Pigment Red 52, Pigment Red 53, Pigment Red 57, Pigment Red 97, Pigment Red 122, Pigment Red 123, Pigment Red 144, Pigment Red 146, Pigment Red 149, Pigment Red 166, Pigment Red 168, Pigment Red 177, Pigment Red 178, Pigment Red 179, Pigment Red 180, Pigment Red 185, Pigment Red 192, Pigment Red 202, Pigment Red 206, Pigment Red 207, Pigment Red 209, Pigment Red 215, Pigment Red 216, Pigment Red 217, Pigment Red 220, Pigment Red 221, Pigment Red 223, Pigment Red 224, Pigment Red 226, Pigment Red 227, Pigment Red 228, Pigment Red 238, Pigment Red 240, Pigment Red 242, Pigment Red 254, and Pigment Red 255;
violet pigments such as Pigment Violet 19, Pigment Violet 23, Pigment Violet 29, Pigment Violet 30, Pigment Violet 37, Pigment Violet 40, and Pigment Violet 50;
yellow pigments such as Pigment Yellow 12, Pigment Yellow 13, Pigment Yellow 14, Pigment Yellow 17, Pigment Yellow 20, Pigment Yellow 24, Pigment Yellow 74, Pigment Yellow 83, Pigment Yellow 86, Pigment Yellow 93, Pigment Yellow 94, Pigment Yellow 95, Pigment Yellow 109, Pigment Yellow 110, Pigment Yellow 117, Pigment Yellow 120, Pigment Yellow 125, Pigment Yellow 128, Pigment Yellow 137, Pigment Yellow 138, Pigment Yellow 139, Pigment Yellow 147, Pigment Yellow 148, Pigment Yellow 150, Pigment Yellow 151, Pigment Yellow 153, Pigment Yellow 154, Pigment Yellow 155, Pigment Yellow 166, Pigment Yellow 168, Pigment Yellow 180, Pigment Yellow 185, and Pigment Yellow 213; orange pigments such as Pigment Orange 13, Pigment Orange 36, Pigment Orange 37, Pigment Orange 38, Pigment Orange 43, Pigment Orange 51, Pigment Orange 55, Pigment Orange 59, Pigment Orange 61, Pigment Orange 64, Pigment Orange 71, and Pigment Orange 74; and
brown pigments such as Pigment Brown 23, Pigment Brown 25, and Pigment Brown 26.

Moreover, Pigment Black 7 may be any carbon black, such as neutral, acidic, or basic carbon black. Acidic carbon black is preferred among these. Examples of usable white pigments include titanium oxide and zinc oxide.

Besides these pigments, dyes may be used in the active energy ray-curable ink composition. In particular, Food Reds 3, 3:1, 7, 9, 17, and 17:1, Food Blues 2 and 2:1, Food Yellow 3, Food Blacks 1 and 2, Food Blown 3, etc. are preferred in view of safety.

The amount of the pigment contained in the active energy ray-curable ink composition is preferably in the range of 5 to 65% by mass in order to ensure a satisfactory color gamut of the printed matter. The lower limit is more preferably 10% by mass or more. The upper limit is more preferably 60% by mass or less, still more preferably 55% by mass or less.

The amount of the dispersant per 100 parts by mass of the pigment is preferably 0.1 parts by mass or more, more preferably 0.5 parts by mass or more, still more preferably 1 part by mass or more, particularly preferably 5 parts by mass or more, most preferably 10 parts by mass or more, further most preferably 20 parts by mass or more, but is preferably 100 parts by mass or less, more preferably 85 parts by mass or less, still more preferably 70 parts by mass or less, particularly preferably 60 parts by mass or less, most preferably 50 parts by mass or less. When the amount is within the range indicated above, the advantageous effect tends to be more suitably achieved.

### Ethylenically unsaturated compound

The active energy ray-curable ink composition of the present invention preferably contains an ethylenically unsaturated compound that can be cured by exposure to light. The ethylenically unsaturated compound preferably has 1 to 20, more preferably 1 to 10, still more preferably 2 to 6 carbon-carbon double bonds. The ethylenically unsaturated compound may be, for example, a (meth)acrylic acid ester compound, a (meth)allyl compound, or a vinyl compound. The ethylenically unsaturated compound may also be a mixture of two or more compounds.

Examples of the (meth)acrylic acid ester compound include (meth)acrylic acid ester compounds of alcohols such as pentaerythritol, dipentaerythritol, trimethylolpropane, ditrimethylolpropane, neopentyl glycol, 1,6-hexanediol, glycerol, polyethylene glycol, and polypropylene glycol, and adducts of alkylene oxides such as ethylene oxide or propylene oxide with these (meth)acrylic acid ester compounds; (meth)acrylic acid ester compounds of adducts of alkylene oxides such as ethylene oxide or propylene oxide with bisphenols such as bisphenol A or bisphenol F; (meth)acrylic acid ester compounds such as epoxy (meth)acrylates, urethane (meth)acrylates, and alkyd (meth)acrylates; and (meth)acrylic acid ester compounds such as epoxidized soybean oil acrylate. Preferred are (meth)acrylic acid ester compounds of alcohols such as pentaerythritol, dipentaerythritol, trimethylolpropane, ditrimethylolpropane, neopentyl glycol, 1,6-hexanediol, glycerol, polyethylene glycol, and polypropylene glycol, and adducts of alkylene oxides such as ethylene oxide or propylene oxide with these (meth)acrylic acid ester compounds. More preferred are (meth)acrylic acid ester compounds of alcohols such as pentaerythritol, dipentaerythritol, trimethylolpropane, and ditrimethylolpropane, and adducts of alkylene oxides such as ethylene oxide or propylene oxide with these (meth)acrylic acid ester compounds.

Examples of the (meth)allyl compound include di(meth)allyl phthalates and tri(meth)allyl isocyanurates.

Examples of the vinyl compound include styrene, divinylbenzene, N-vinylpyrrolidone, and vinyl acetate.

In particular, in view of compatibility with the allylic polymer and curability in photo-curing, dipentaerythritol hexaacrylate, dipentaerythritol tetraacrylate, pentaerythritol tetraacrylate, ditrimethylolpropane tetraacrylate, pentaerythritol triacrylate, trimethylolpropane triacrylate, ethylene oxide-modified trimethylolpropane triacrylate, propylene oxide-modified trimethylolpropane triacrylate, and propylene oxide-modified glycerol triacrylate are preferred, and ditrimethylolpropane tetraacrylate, dipentaerythritol hexaacrylate, and ethylene oxide-modified trimethylolpropane triacrylate are more preferred.

The amount of the ethylenically unsaturated compound contained in the active energy ray-curable ink composition of the present invention is preferably 50 to 1000 parts by mass, more preferably 100 to 950 parts by mass, still more preferably 100 to 750 parts by mass per 100 parts by mass of the allylic polymer in the active energy ray-curable ink composition. The lower limit is particularly preferably 200 parts by mass or more, most preferably 300 parts by mass or more. The upper limit is particularly preferably 650 parts by mass or less, most preferably 500 parts by mass or less.

### Other additives

The active energy ray-curable ink composition of the present invention may contain a polymerization initiator, in particular preferably a photopolymerization initiator. Examples of the photopolymerization initiator contained in the photoactive energy ray-curable ink composition include alkylphenone initiators such as acetophenone, 2,2-dimethoxy-2-phenylacetophenone, 2,2-diethoxy-2-phenylacetophenone, 1,1-dichloroacetophenone, N,N-dimethylaminoacetophenone, 2-dimethylamino-2-(4-methylbenzyl)-1-(4-morpholin-4-yl-phenyl)-butan-1-one, 2-methyl-1-[4-(methylthio)phenyl]-2-morpholinopropan-1-one, 1-hydroxycyclohexyl phenyl ketone, 2-hydroxy-2-methyl-1-phenylpropan-1-one, 2-hydroxy-2-methyl-1-phenylpropanone, 2-benzyl-2-dimethylamino-1-(4-morpholinophenyl)-butanone-1, and 2-(dimethylamino)-2-[(4-methylphenyl)methyl]-1-[4-(4-morpholinyl)phenyl]-1-butanone; benzoin initiators such as benzoin and benzoin ethyl ether; benzophenone initiators such as 4,4'-bis-(diethylamino)benzophenone; acylphosphine oxide initiators such as 2,4,6-trimethylbenzoyl diphenylphosphine oxide and bis(2,4,6-trimethylbenzoyl)-phenylphosphine oxide; thioxanthone initiators such as thioxanthone, 2-isopropylthioxanthone, 2-chlorothioxanthone, 2,4-dimethylthioxanthone, 2,4-diisopropylthioxanthone, and 2,4-diethylthioxanthone; benzil initiators such as benzil (dibenzoyl); and quinone initiators such as 9,10-phenanthrenequinone.

Each of these photopolymerization initiators may be used alone, or a mixture of two or more of them in any ratio may be used as needed. Among the photopolymerization initiators mentioned above, benzophenone initiators, acylphosphine oxide initiators, thioxanthone initiators, and alkylphenone initiators are particularly preferred. Specifically, 4,4'-bis-(diethylamino)benzophenone, 2,4,6-trimethylbenzoyldiphenylphosphine oxide, 2,4-diethylthioxanthone, and 2-dimethylamino-2-(4-methylbenzyl)-1-(4-morpholin-4-yl-phenyl)-butan-1-one are preferred.

The amount of the photopolymerization initiator contained in the active energy ray-curable ink composition is preferably in the range of 0.1 to 20% by mass, more preferably in the range of 0.5 to 17% by mass, still more preferably in the range of 1 to 15% by mass of the total amount of the active energy ray-curable ink composition. The lower limit is particularly preferably 2% by mass or more, most preferably 5% by mass or more, further most preferably 7% by mass or more.

The active energy ray-curable ink composition may combine a co-photoinitiator (for example, an amine co-photoinitiator such as triethanolamine).

The amount of the co-photoinitiator is preferably in the range of 0.1 to 5% by mass, more preferably in the range of 0.5 to 3% by mass of the total amount of the active energy ray-curable ink composition.

The active energy ray-curable ink composition of the present invention may contain various additives depending on the purpose. Examples of such additives include stabilizers (e.g., polymerization inhibitors such as hydroquinone, methoquinone, and methylhydroquinone), fillers, viscosity modifiers, extenders, and waxes. The amount of the stabilizer contained in the active energy ray-curable ink composition is preferably in the range of 0.01 to 2% by mass, more preferably in the range of 0.05 to 1% by mass of the total amount of the active energy ray-curable ink composition.

An extender may be added to the active energy ray-curable ink composition of the present invention. The term "extender" refers to a component that may be used to impart properties such as proper printability and viscoelasticity to the active energy ray-curable ink composition, and various extenders usually used in the preparation of active energy ray-curable ink compositions may be used. Examples of such extenders include clay, kaolinite (kaolin), barium sulfate, magnesium sulfate, calcium carbonate, silicon oxide (silica), bentonite, talc, mica, and titanium oxide. Talc is most preferred among the extenders mentioned above. The amount of these extenders added may be, but is not limited to, about 0 to 10% by mass of the total amount of the active energy ray-curable ink composition.

A wax may be added to the active energy ray-curable ink composition of the present invention in order to improve abrasion resistance, blocking resistance, and other properties. Examples of the wax include waxes such as paraffin wax, carnauba wax, beeswax, microcrystalline wax, polyethylene wax, oxidized polyethylene wax, polytetrafluoroethylene wax, and amide wax, and fatty acids having a number of carbon atoms in the range of about 8 to 18, such as coconut oil fatty acids and soybean oil fatty acids. Polyethylene wax is most preferred among the waxes mentioned above. The amount of these waxes added may be, but is not limited to, about 0 to 10% by mass of the total amount of the active energy ray-curable ink composition.

The active energy ray-curable ink composition of the present invention is generally prepared as follows: components such as an allylic polymer, a dispersant, and a stabilizer are dissolved in an ethylenically unsaturated compound with stirring at a temperature of 60°C to 100°C to prepare a varnish, which is then mixed with a pigment, a photopolymerization initiator, and other additives with stirring using a butterfly mixer, and subsequently the mixture is kneaded using a three-roll mill or other device to obtain an active energy ray-curable ink composition.

The active energy ray-curable ink composition obtained as above is curable by exposure to an active energy ray. The active energy ray may be any ray that can impart energy required for the progress of the curing reaction of the ethylenically unsaturated compound in the active energy ray-curable ink composition, including ultraviolet rays as well as electron beams, α rays, β rays, γ rays, and X rays. The use of a particularly high energy light source allows the curing reaction to proceed without using a polymerization initiator. Moreover, in exposure to ultraviolet rays, a mercury-free light source is strongly desired from the standpoint of environmental protection, and thus replacement with a GaN-based semiconductor ultraviolet light-emitting device is industrially and environmentally very useful. Furthermore, ultraviolet light-emitting diodes (UV-LEDs) and ultraviolet laser diodes (UV-LDs) are preferred ultraviolet light sources because of their small size, long life, high efficiency, and low cost.

The curing reaction of the active energy ray-curable ink composition may be carried out using any curing apparatus under any curing conditions, and methods usually used for photocuring reaction may be used.

The active energy ray-curable ink composition of the present invention may be used in any application. For example, it may be used in technical fields such as photocurable lithographic inks, silk screen inks, and gravure inks.

### (Examples)

The present invention is described in greater detail below referring to examples. The present invention is not limited to the examples.

### 1) Preparation of active energy ray-curable resin composition

An active energy ray-curable resin composition (composition 1) was prepared according to the formulation shown in Table 1.

**[Table 1]**

| | | Composition 1 |
|---|---|---|
| Allylic polymer | RADPAR AD-032 *1 | 35 |
| Ethylenically unsaturated compound | DTMPTA *2 | 65 |
| Polymerization inhibitor | MHQ *3 | 0.1 |

The figures in the table are given in parts by mass.
*1; RADPAR AD-032: diallyl 1,2-cyclohexanedicarboxylate resin available from OSAKA SODA CO., LTD.
*2; DTMPTA: ditrimethylolpropane tetraacrylate, MIRAMER M410 available from Miwon Specialty Chemical Co., Ltd.
*3; MHQ: methylhydroquinone available from FUJIFILM Wako Pure Chemical Corporation

### 2) Preparation of active energy ray-curable ink compositions 2 to 6 (Examples 1 to 4 and Comparative

### Example 1)

The composition 1 prepared in the above 1) was kneaded with the components shown in Table 2 using a three-roll mill to prepare active energy ray-curable ink compositions 2 to 6 which were then evaluated for ink properties. Here, no dispersant was added to the composition 6.

**[Table 2]**

| | | Composition 2 | Composition 3 | Composition 4 | Composition 5 | Composition 6 |
|---|---|---|---|---|---|---|
| Resin composition | Composition 1 *1 | 38 | 38 | 38 | 38 | 38 |
| Ethylenically unsaturated compound | DPHA *2 | 15 | 15 | 15 | 15 | 15 |
| | 3EO-TMPTA *3 | 8 | 8 | 8 | 8 | 9 |
| Dispersant | PB821 *4 | 1 | | | | |
| | PB881 *5 | | 1 | | | |
| | 32000 *6 | | | 1 | | |
| | 36000 *7 | | | | 1 | |
| | | | | | | 0 |
| Pigment | Carbon black *8 | 20 | 20 | 20 | 20 | 20 |
| Extender pigment | Talc *9 | 2 | 2 | 2 | 2 | 2 |
| Wax | Polyethylene wax *10 | 2 | 2 | 2 | 2 | 2 |
| Photopolymerization initiator | Omnirad379 *11 | 4 | 4 | 4 | 4 | 4 |
| | OmniradTPO H *12 | 4 | 4 | 4 | 4 | 4 |
| | EAB-SS *13 | 3 | 3 | 3 | 3 | 3 |
| | KAYACURE DETX-S *14 | 3 | 3 | 3 | 3 | 3 |
| Polymerization inhibitor | MHQ *15 | 0.1 | 0.1 | 0.1 | 0.1 | 0.1 |

| | | | | | | |
|---|---|---|---|---|---|---|
| The figures in the table are given in parts by mass. *1; Composition 1 prepared in the above 1) *2; DPHA: dipentaerythritol hexaacrylate, ARONIX M-405 available from Toagosei Co., Ltd. *3; 3EO-TMPTA: ethylene oxide-modified trimethylolpropane triacrylate, MIRAMER M3130 available from Miwon Specialty Chemical Co., Ltd. *4; AJISPER PB821 (acid value: 17 mg KOH/g, amine value: 11.2 mg KOH/g) available from Ajinomoto Fine-Techno Co., Inc. *5; AJISPER PB881 (acid value: 16 mg KOH/g, amine value: 17.4 mg KOH/g) available from Ajinomoto Fine-Techno Co., Inc. *6; SOLSPERSE 32000 (amine value: 31.2 mg KOH/g) available from The Lubrizol Corporation *7; SOLSPERSE 36000 (acid value: 45 mg KOH/g) available from The Lubrizol Corporation *8; Carbon black: Carbon black MA7 (acidic) available from Mitsubishi Chemical Corporation *9; Talc: HI-Filler #5000 PJ available from Matsumura Sangyo Co., Ltd. *10; Polyethylene wax: S-394-N1 available from Shamrock *11; Omnirad 379: 2-dimethylamino-2-(4-methylbenzyl)-1-(4-morpholin-4-yl-phenyl)-butan-1-one available from IGM Resins B.V. *12; Omnirad TPO H: 2,4,6-trimethylbenzoyldiphenylphosphine oxide available from IGM Resins B.V. *13; EAB-SS: 4,4'-bis-(diethylamino)benzophenone available from Daido Chemical Industry Co., Ltd. *14; KAYACURE DETX-S: 2,4-diethylthioxanthone available from Nippon Kayaku Co., Ltd. *15; MHQ: methylhydroquinone available from FUJIFILM Wako Pure Chemical Corporation | | | | | | |

### 3) Flowability test

The compositions prepared in the above 2) were each dropped in an amount of 0.5 mL onto a plate inclined at 60 degrees. Ten minutes later, the distance each composition flowed (flowability) was determined. The results for evaluation of flowability are expressed as an index relative to that of Comparative Example 1 taken as 100 and are shown in Table 3. A higher index indicates better flowability, particularly in the ink fountain.

**[Table 3]**

| | Example 1 | Example 2 | Example 3 | Example 4 | Comparative Example 1 |
|---|---|---|---|---|---|
| Composition | 2 | 3 | 4 | 5 | 6 |
| Flowability | 150 | 140 | 210 | 120 | 100 |

Comparisons of Examples 1 to 4 with Comparative Example 1 show that the incorporation of a dispersant to an active energy ray-curable ink composition containing an allylic polymer produced by polymerizing an allylic compound of formula (I) improved the flowability, particularly in the ink fountain.

### 4) Preparation of active energy ray-curable ink compositions (Examples 5 to 7 and Comparative Example 1)

The components shown in Table 4 were kneaded using a three-roll mill to prepare active energy ray-curable ink compositions 7 to 9, which were then evaluated for ink properties.

**[Table 4]**

| | | Composition 7 | Composition 8 | Composition 9 |
|---|---|---|---|---|
| Resin composition | Composition 1 *1 | 38 | 38 | 38 |
| Ethylenically unsaturated compound | DPHA *2 | 15 | 15 | 10 |
| | 3EO-TMPTA *3 | 8.9 | 4 | 4 |
| Dispersant | PB821 *4 | 0.1 | 5 | 10 |
| Pigment | Carbon black *5 | 20 | 20 | 20 |
| Extender pigment | Talc *6 | 2 | 2 | 2 |
| Wax | Polyethylene wax *7 | 2 | 2 | 2 |
| Photopolymerization initiator | Omnirad379 *8 | 4 | 4 | 4 |
| | OmniradTPO H *9 | 4 | 4 | 4 |
| | EAB-SS *10 | 3 | 3 | 3 |
| | KAYACURE DETX-S *11 | 3 | 3 | 3 |
| Polymerization inhibitor | MHQ *12 | 0.1 | 0.1 | 0.1 |

| | | | | |
|---|---|---|---|---|
| The figures in the table are given in parts by mass. *1; Composition 1 prepared in the above 1) *2; DPHA: dipentaerythritol hexaacrylate, ARONIX M-405 available from Toagosei Co., Ltd. *3; 3EO-TMPTA: ethylene oxide-modified trimethylolpropane triacrylate, MIRAMER M3130 available from Miwon Specialty Chemical Co., Ltd. *4; AJISPER PB821 (amine value: 11.2 mg KOH/g) available from Ajinomoto Fine-Techno Co., Inc. *5; Carbon black: Carbon black MA7 (acidic) available from Mitsubishi Chemical Corporation *6; Talc: HI-Filler #5000 PJ available from Matsumura Sangyo Co., Ltd. *7; Polyethylene wax: S-394-N1 available from Shamrock *8; Omnirad 379: 2-dimethylamino-2-(4-methylbenzyl)-1-(4-morpholin-4-yl-phenyl)-butan-1-one available from IGM Resins B.V. *9; Omnirad TPO H: 2,4,6-trimethylbenzoyldiphenylphosphine oxide available from IGM Resins B.V. *10; EAB-SS: 4,4'-bis-(diethylamino)benzophenone available from Daido Chemical Industry Co., Ltd. *11; KAYACURE DETX-S: 2,4-diethylthioxanthone available from Nippon Kayaku Co., Ltd. *12; MHQ: methylhydroquinone available from FUJIFILM Wako Pure Chemical Corporation | | | | |

### 5) Flowability test

The compositions prepared in the above 4) were each dropped in an amount of 0.5 mL onto a plate inclined at 60 degrees. Ten minutes later, the distance each composition flowed (flowability) was determined. The results for evaluation of flowability are expressed as an index relative to that of Comparative Example 1 taken as 100 and are shown in Table 5. A higher index indicates better flowability, particularly in the ink fountain.

**[Table 5]**

| | Example 5 | Example 6 | Example 7 | Comparative Example 1 |
|---|---|---|---|---|
| Composition | 7 | 8 | 9 | 6 |
| Flowability | 120 | 280 | 420 | 100 |

Comparisons of Examples 1 and 5 to 7 with Comparative Example 1 show that the incorporation of 0.1 to 10 parts of a dispersant to an active energy ray-curable ink composition containing an allylic polymer produced by polymerizing an allylic compound of formula (I) improved the flowability, particularly in the ink fountain.

### INDUSTRIAL APPLICABILITY

The active energy ray-curable ink composition of the present invention may be used in applications such as inks for plastic substrates (for example, printing inks such as photocurable lithographic inks, silk screen inks, and gravure inks).

## Claims

1. An active energy ray-curable ink composition, comprising:
an allylic polymer;
a dispersant; and
a pigment,
the allylic polymer being produced by polymerizing an allylic compound represented by the following formula (I): 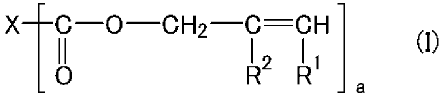 wherein R¹ and R² each represent H or CH₃;
X represents an a-valent group having an unsubstituted saturated or partially unsaturated four- to eight-membered cyclic backbone; and a represents 2 or 3.

2. The active energy ray-curable ink composition according to claim 1,
wherein the dispersant has at least one of a basic polar functional group or an acidic polar functional group.

3. The active energy ray-curable ink composition according to claim 1 or 2,
wherein the dispersant has at least one of an amine value of 3 mg KOH/g or higher or an acid value of 3 mg KOH/g or higher.

4. The active energy ray-curable ink composition according to any one of claims 1 to 3,
wherein X in formula (I) has any of the following cyclic backbones:

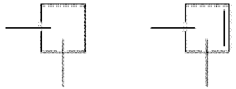

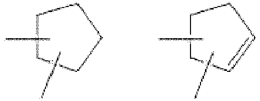

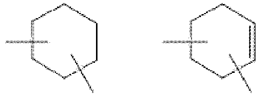

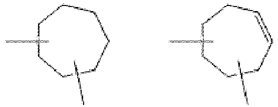

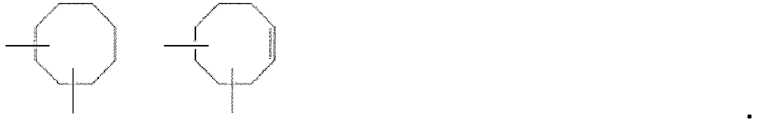

5. The active energy ray-curable ink composition according to any one of claims 1 to 4, further comprising an ethylenically unsaturated compound.

6. The active energy ray-curable ink composition according to any one of claims 1 to 5, further comprising a photopolymerization initiator.

## Patentansprüche

1. Eine durch aktive Energiestrahlen härtbare Druckfarbenzusammensetzung, umfassend:
ein Allylpolymer;
ein Dispergiermittel; und
ein Pigment,
wobei das Allylpolymer durch Polymerisation einer Allylverbindung, dargestellt durch die folgende Formel (I), hergestellt ist: 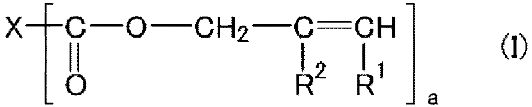
wobei R¹ und R² jeweils H oder CH₃ darstellen;
X eine a-wertige Gruppe mit einem unsubstituierten gesättigten oder teilweise ungesättigten vier- bis achtgliedrigen cyclischen Gerüst darstellt; und a gleich 2 oder 3 darstellt.

2. Die durch aktive Energiestrahlen härtbare Druckfarbenzusammensetzung nach Anspruch 1,
wobei das Dispergiermittel mindestens eine aus einer basischen polaren funktionellen Gruppe oder einer sauren polaren funktionellen Gruppe aufweist.

3. Die durch aktive Energiestrahlen härtbare Druckfarbenzusammensetzung nach Anspruch 1 oder 2,
wobei das Dispergiermittel mindestens einen aus einem Aminwert von 3 mg KOH/g oder höher oder einem Säurewert von 3 mg KOH/g oder höher aufweist.

4. Die durch aktive Energiestrahlen härtbare Druckfarbenzusammensetzung nach einem der Ansprüche 1 bis 3,
wobei X in Formel (I) eines der folgenden cyclischen Gerüste aufweist:

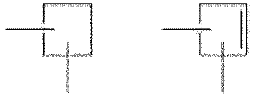

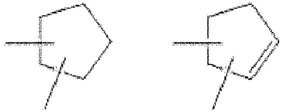

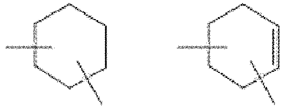

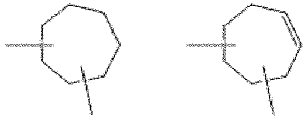

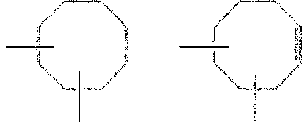

5. Die durch aktive Energiestrahlen härtbare Druckfarbenzusammensetzung nach einem der Ansprüche 1 bis 4, welche ferner eine ethylenisch ungesättigte Verbindung umfasst.

6. Die durch aktive Energiestrahlen härtbare Druckfarbenzusammensetzung nach einem der Ansprüche 1 bis 5, welche ferner einen Photopolymerisationsinitiator umfasst.

## Revendications

1. Composition d'encre durcissable par rayonnement à énergie active, comprenant :
un polymère allylique ;
un dispersant ; et
un pigment,
le polymère allylique étant produit par polymérisation d'un composé allylique représenté par la formule (I) suivante : 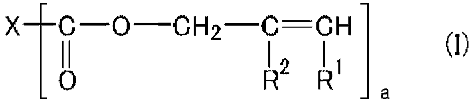
dans laquelle chacun de R¹ et R² représente H ou CH₃ ;
X représente un groupe de valence a ayant un squelette cyclique à quatre à huit chaînons non substitué saturé ou partiellement insaturé ; et a représente 2 ou 3.

2. Composition d'encre durcissable par rayonnement à énergie active selon la revendication 1, dans laquelle le dispersant a au moins l'un parmi un groupe fonctionnel polaire basique et un groupe fonctionnel polaire acide.

3. Composition d'encre durcissable par rayonnement à énergie active selon la revendication 1 ou 2, dans laquelle le dispersant a au moins l'un parmi un indice d'amine de 3 mg KOH/g ou plus et un indice d'acide de 3 mg KOH/g ou plus.

4. Composition d'encre durcissable par rayonnement à énergie active selon l'une quelconque des revendications 1 à 3, dans laquelle X dans la formule (I) a l'un quelconque des squelettes cycliques suivants :

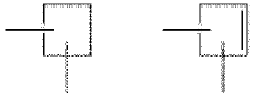

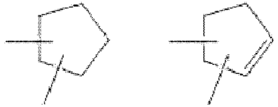

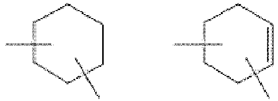

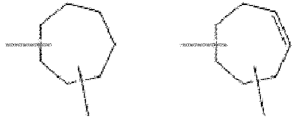

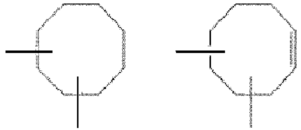

5. Composition d'encre durcissable par rayonnement à énergie active selon l'une quelconque des revendications 1 à 4, comprenant en outre un composé à insaturation éthylénique.

6. Composition d'encre durcissable par rayonnement à énergie active selon l'une quelconque des revendications 1 à 5, comprenant en outre un amorceur de photopolymérisation.
